(19) **Europäisches Patentamt**

**European Patent Office**

**Office européen des brevets**

(11) Numéro de publication: **0 503 733 A1**

## (12) DEMANDE DE BREVET EUROPEEN

(21) Numéro de dépôt: **92200656.4**

(22) Date de dépôt: **04.03.92**

(51) Int. Cl.5: **C09D 9/00**

Priorité 130391 IT VI91000039.

(30) Priorité: **13.03.91**
**23.10.91**

(43) Date de publication de la demande:
**16.09.92 Bulletin 92/38**

(84) Etats contractants désignés:
**AT BE CH DE DK ES FR GB GR IT LI LU MC NL PT SE**

(71) Demandeur: **BICEGO NARCISO - RESTAURI ARCHITETTONICI**
**Via Santi, 12**
**I-36078 Valdagno (Vicenza)(IT)**

(72) Inventeur: **Bicego, Narciso**
**Via Santi, 12**
**Valdagno (Vicenza)(IT)**

(74) Mandataire: **Bettello, Pietro, Dott. Ing. et al**
**Via Col d'Echele, 25**
**I-36100 Vicenza(IT)**

(54) **Composition de dévernissage.**

(57) La composition, de type basique, renferme un produit basique (carbonate de sodium), un liant (hydrate de calcium), un produit inerte (carbonate de calcium) et un produit inerte hygroscopique (pâte de papier ou cellulose).

Le brevet indique à titre d'exemple les pourcentages précis de trois compositions différentes, d'agressivité plus ou moins forte.

La présente invention a pour objet une composition de dévernissage propre à assurer l'élimination de tous types de vernis (synthétique, à l'huile ou polyuréthane) ainsi que des peintures au détrempé, des couleurs à la chaux ou à la caséine, et ce sur des surfaces murales quelconques, y compris ligneuses.

On sait que le dévernissage constitue généralement une opération longue et pénible. A l'heure actuelle, elle est réalisée à l'aide de machines de sablage ou par utilisation de compositions de dévernissages, lesquelles peuvent être regroupées en deux grandes familles.

Les dévernisseurs d'une première famille, dits chimiques, se présentent généralement sous forme liquide et sont à base de substances du genre du chlorure de méthylène, du toluène, du xylène ou du dichlorométhane, toutes ces substances étant hautement toxiques pour l'opérateur et polluantes pour l'ambiance. Sur le plan pratique, ces compositions chimiques sont appliquées sur le vernis à éliminer et sont maintenues sur ce dernier un laps de temps convenable ; lorsque finalement le vernis se détache, il est éliminé à l'aide d'un racle ou similaire en donnant naissance à une pâte malléable extrêmement toxique et polluante, très difficilement recyclable.

Les dévernisseurs de la seconde famille, appelés dévernisseurs alcalins, renferment, comme leur nom l'indique, au moins une substance basique et se présentent sous forme soit pulvérulente, soit liquide. Ils comportent l'indiscutable avantage de ne pas être toxiques et d'être beaucoup moins dangereux pour l'ambiance que les dévernisseurs chimiques ; en revanche, leur action est difficilement contrôlable et de plus ils provoquant fréquemment sur les surfaces traitées des taches, auréoles ou autres altérations.

Au surplus, un certain nombre de dévernisseurs connus renferment des sulfates et des colles qui se révèlent dommageables, surtout lorsqu'il s'agit de travaux de restauration. D'autres dévernisseurs classiques contiennent des farines inertes qui sèchent trop vite en provoquant elles-mêmes des endommagements de la surface traitée.

On peut évidemment laisser agir ces compositions de dévernissage pendant un laps de temps réduit, en complétant l'ouvrage à l'aide d'une machine de sablage, mais on se heurte alors à une augmentation sensible du coût de l'opération.

En outre, l'utilisation d'une machine de sablage est toujours très délicate et elle doit être absolument déconseillée lorsqu'on a affaire à des supports ligneux. Cette utilisation détermine au surplus l'apparition de poussières et oblige en conséquence les opérateurs à endosser des masques et des vêtements de protection.

On a encore proposé l'utilisation des chalumeaux de soudure pour éliminer les vieux vernis, en s'aidant d'une raclette. Toutefois, un tel processus exige une habilité non négligeable de la part de l'opérateur et il arrive fréquemment que des opérateurs même spécialisés provoquent des brûlages sur les surfaces traitées.

La présente invention a pour but de proposer une composition de dévernissage qui ne comporte pas les inconvénients précités, tout en se révélant plus efficace que les dévernisseurs classiques.

La composition de dévernissage suivant l'invention est définie à la revendication 1.

Substantiellement parlant, cette composition renferme un produit basique, un liant, un produit inerte et un produit inerte hygroscopique. Ce dernier a plus particulièrement pour but de maintenir le plus longtemps possible sur la surface à dévernir l'action basique de la composition chimique, en s'opposant d'une part à l'absorption rapide de l'enduit et d'autre part à une évaporation précoce vers l'extérieur.

De manière avantageuse, le produit basique est constitué par du carbonate de sodium, le liant par de l'hydrate de calcium, le produit inerte par du carbonate de calcium et le produit inerte hygroscopique par de la pâte de papier ou de la cellulose.

Les essais qui ont été effectués ont permis de détecter les compositions de dévernissage qui se sont révélées les plus efficace dans la majorité des cas. En fait, les pourcentages préférés semblent les suivants, donnés en poids :

| Hydrate de calcium | 70% ± 5% |
|---|---|
| Carbonate de sodium | 15% ± 5% |
| Carbonate de calcium | 9% ± 3% |
| Pâte de papier ou cellulose | 6% ± 2% |

Il ressort des analyses qui ont été effectuées que le pH d'une telle composition est de l'ordre de 13 ± 0,2, tandis que sa densité absolue est de 1,53 g/cm$^3$.

La composition ci-dessus indiquée est en pratique particulièrement efficace dans le plus grand nombre des cas ; il peut cependant arriver, en fonction surtout de la nature du matériau sur lequel elle doit être appliquée, qu'elle s'avère trop agressive (en donnant lieu à des endommagements dudit matériau), ou au contraire trop peu agressive (en aboutissant à des résultats insuffisants en ce qui concerne l'opération de dévernissage).

Dans ces conditions, on a mis au point deux compositions qui présentent des pourcentages spéciaux, l'une de ces compositions étant très agressive, tandis que l'autre l'est moins.

La composition la plus agressive comporte les pourcentages en poids ci-après :

| Hydrate de calcium | 70% ± 10% |
| Carbonate de sodium | 20% ± 10% |
| Carbonate de calcium | 4% ± 2% |
| Pâte de papier ou cellulose | 6% ± 2% |

Une telle composition permet d'obtenir des résultats rapides et satisfaisants en ce qui concerne le dévernissage, mais par suite de son agressivité, elle doit uniquement être employée sur des matériaux déterminés qui ne sont pas facilement attaqués par elle, et en tout état de cause, sous un contrôle étroit, éventuellement après un essai sur un échantillon.

Vice versa la composition la moins agressive comporte les pourcentages ci-après, toujours donnés en poids :

| Hydrate de calcium | 35% ± 5% |
| Carbonate de sodium | 3,5% ± 1,5% |
| Carbonate de calcium | 51,5% ± 6,5% |
| Pâte de papier ou cellulose | 10% |

Il ressort des analyses qui ont été effectuées que le pH de cette composition peut varier de 12,4 à 13,2, en fonction essentiellement de la teneur en carbonate de sodium. Sa densité absolue est de l'ordre de 2,58 à 2,6° $g/cm^3$.

Cette dernière composition agit de manière relativement lente, mais elle présente l'avantage substantiel d'être très peu agressive vis-à-vis du matériau sur lequel elle est appliquée, ce qui la rend particulièrement apte à être employée sur des matériaux délicats par suite de la facilité du contrôle de son action.

Sur le plan pratique, il a été démontré que la composition agressive précitée fournissait des résultats meilleurs lorsqu'elle était mélangée à de l'eau dans la proportion de 1,30 kg d'eau pour 1 kg de produit. De la même manière, la composition la moins agressive donne des résultats améliorés lorsqu'elle est mélangée à de l'eau en proportions égales.

Les essais qui ont été effectués ont permis de vérifier que des résultats sensiblement améliorés étaient obtenus avec de la pâte de papier du type dit "dérésiné".

Dans ses différentes versions, on a pu vérifier que la composition suivant l'invention constituait un produit facile à verser et d'un usage non dangereux, même de la part de personnes non expertes, tout en étant susceptible d'être transporté sans problème.

En outre, et à l'inverse d'autres compositions de type connu qui assurent la même fonction, il s'est avéré que la composition suivant l'invention ne présentait aucune résistance latérale et pouvait être éliminée sans effort ; il suffit en fait d'éliminer les couches de vernis dans le temps prévu, sans aucun risque d'endommagement des surfaces envisagées, mêmes les plus délicates, notamment dans le domaine des travaux de restauration architecturale ou artistique, avec par dessus tout l'avantage que l'action de dévernissage peut être étroitement contrôlée couche par couche.

## Revendications

1. Composition de dévernissage du type alcalin, caractérisée en ce qu'elle renferme en mélange un produit basique, un liant, un produit inerte et un produit inerte hygroscopique.

2. Composition de dévernissage suivant la revendication 1, caractérisée en ce que le produit basique est constitué par du carbonate de sodium, le liant par de l'hydrate de calcium, le produit inerte par du carbonate de calcium et le produit inerte hygroscopique par de la pâte de papier ou de la cellulose.

3. Composition de dévernissage suivant la revendication 2, caractérisée en ce qu'elle présente les pourcentages en poids suivants :

| Hydrate de calcium | 70% ± 5% |
|---|---|
| Carbonate de sodium | 15% ± 5% |
| Carbonate de calcium | 9% ± 3% |
| Pâte de papier ou cellulose | 6% ± 2% |

**4.** Composition de dévernissage suivant la revendication 2, caractérisée en ce qu'elle présente les pourcentages en poids suivants :

| Hydrate de calcium | 70% ± 10% |
|---|---|
| Carbonate de sodium | 20% ± 10% |
| Carbonate de calcium | 4% ± 2% |
| Pâte de papier ou cellulose | 6% ± 2% |

**5.** Composition de dévernissage suivant la revendication 2, caractérisée en ce qu'elle présente les pourcentages en poids suivants :

| Hydrate de calcium | 35% ± 5% |
|---|---|
| Carbonate de sodium | 3,5% ± 1,5% |
| Carbonate de calcium | 51,5% ± 6,5% |
| Pâte de papier ou cellulose | 10% |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-1 016 844 (SANTI & Co.) <br> * En entier * <br> --- | 1 | C 09 D 9/00 |
| A | FR-A-1 012 729 (ALEX) <br> --- | 1,2 | |
| A | EP-A-0 055 886 (M.I.D. BRAILSFORD) <br> ----- | 1 | |

| | DOMAINES TECHNIQUES RECHERCHES (Int. Cl.5) |
|---|---|
| | C 09 D |

**Le présent rapport a été établi pour toutes les revendications**

| Lieu de la recherche | Date d'achèvement de la recherche | Examinateur |
|---|---|---|
| LA HAYE | 19-05-1992 | CATURLA VICENTE V. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
....................................................................................................
& : membre de la même famille, document correspondant

EPO FORM 1503 03.82 (P0402)